# EUROPEAN PATENT SPECIFICATION

(11) **EP 3 486 432 B1**
(45) Date of publication and mention of the grant of the patent: **02.04.2025**
(21) Application number: 17202860.7
(22) Date of filing: 21.11.2017
(51) Int. Cl.: B29D 99/00, B32B 15/01, C22C 38/18, F01D 5/14, F01D 5/28, F04D 29/02, F04D 29/32, F04D 29/54

(54) **BLADE AND METHOD FOR MANUFACTURING THE SAME**
SCHAUFEL UND VERFAHREN ZUR HERSTELLUNG DAVON
LAME ET SON PROCÉDÉ DE FABRICATION

(43) Date of publication of application: 22.05.2019
(73) Proprietor: Ansaldo Energia Switzerland AG, 5400 Baden (CH)
(72) Inventor: STEFANIS, Vasileios, 5443 NIEDERROHRDORF (CH); PAUL, Anish, 5200 BRUGG (CH); BOSSMANN, Hans-Peter, 79787 LAUCHRINGEN (DE)
(74) Representative: Studio Torta S.p.A.

(56) References cited:
- EP-A1- 2 767 616
- EP-A1- 3 121 378
- EP-A2- 1 980 714
- EP-A2- 2 353 830
- US-A- 3 951 612
- US-A- 5 791 879
- BROOMAN E W: "COMPLIANT ELECTRODEPOSITED AND ELECTROLESS NANO-STRUCTURED AND NANO-COMPOSITE COATINGS TO REPLACE CHROMIUM COATINGS", GALVANOTECHNIK, LEUZE VERLAG, vol. 26, no. 12, 1 December 2005 (2005-12-01), pages 2843 - 2853, XP001501535, ISSN: 0016-4232

## Description

### TECHNICAL FIELD

The present invention relates to a blade for use in a gas turbine and a method for manufacturing the same. The blade is preferably a blade of a compressor of a gas turbine and it can be a stator or a rotor blade. Use of this blade is particularly advantageous for the initial stages of a compressor of a gas turbine, e.g. for any of the stages one, two, three or four, wherein stage one identifies the stage closest to the air inlet.

### BACKGROUND

Composite compressor blades for gas turbines are known; for example these compressor blades are made out of carbon fibres impregnated with an epoxy resin. In addition, in order to withstand erosion caused by water droplets or other elements that could pass through the filter at the entrance of the gas turbine inlet, these blades can be provided with an erosion protection layer at selected portions thereof. In particular, it is known to provide erosion protection layers made out of titanium or titanium alloys or nickel or nickel alloys, in order to guarantee the required reliability for the blade. For example, EP 2 353 830 A2 discloses the use of such materials.

Titanium and titanium alloys are expensive and difficult to apply, e.g. because titanium components are difficult to machine and shape. In addition, titanium, nickel and alloys thereof have proved to provide only partially satisfying erosion protection.

EP 3 121 378 A1 discloses a blade for use in a gas turbine comprising at least a composite material part and at least an insert at least partially covering the composite material part, wherein the insert is made out of steel, and the insert is coated with an erosion protection layer. Other examples of known blades are disclosed in US 5 791 879 A, EP 1 980 714 A2, EP 2 353 830 A2, US 3 951 612 A and in EP 2 767 616 A1.

### SUMMARY

The invention includes providing a blade and a method for manufacturing these blades, which allow an improved erosion protection of the blades compared to existing blades.

These and further aspects are attained by providing a blade and a method in accordance with the accompanying claims.

The inventors have surprisingly discovered that the use of steel, in particular high chromium (Cr) content steel, together with a specific erosion protection layer, can guarantee a better erosion protection than the known solutions.

### BRIEF DESCRIPTION OF THE DRAWINGS

Further characteristics and advantages will be more apparent from the description of nonexclusive embodiments of the blade and method, illustrated by way of non-limiting example in the accompanying drawings, in which:
Figure 1 shows a blade;
Figure 2 shows a diagram indicative of the lost mass from samples impinged by water droplets as an indication of the erosion resistance;
Figure 3 shows a cross section of the blade through line III-III of figure 1;
Figures 4 through 8 show different kinds of inserts and different ways of connecting the inserts to the composite material part of the blade;
Figures 9, 10 and 10a show different examples of blades; figure 10a shows a cross section through line X-X of figure 10;
Figures 11 through 14 show a first embodiment of a method for manufacturing the blade;
Figures 15 through 18 show a second embodiment of the method for manufacturing the blade.

Embodiments and/or examples are only according to the invention if they fall within the scope of the accompanying claims.

### DETAILED DESCRIPTION OF EXEMPLARY EMBODIMENTS

With reference to the figures, these show a blade 1 (stator or rotor blade) such as a compressor blade of a gas turbine; preferably the blade 1 is part of the first and/or second and/or third and/or fourth stage of a compressor of a gas turbine, but it can also be used for other stages.

The blade 1 generally has a root 2 and an airfoil 3.

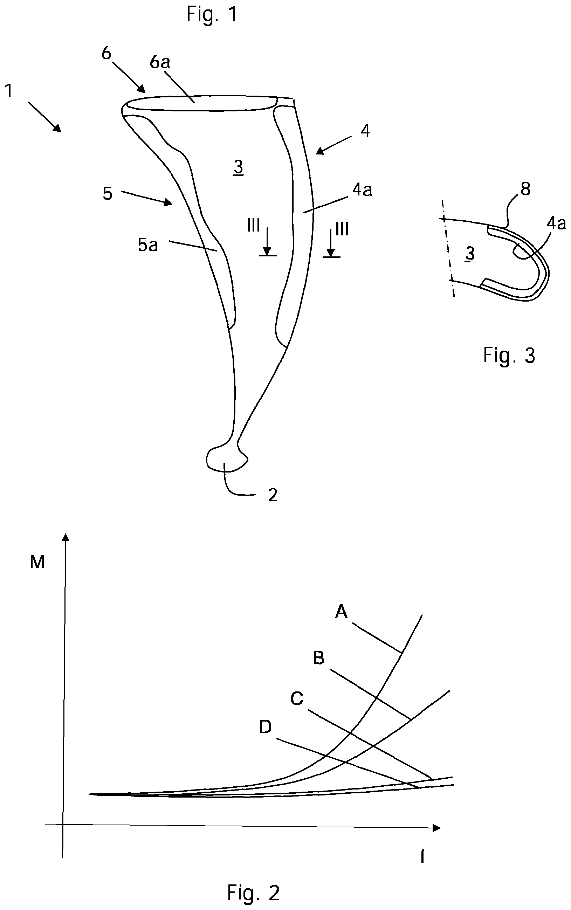

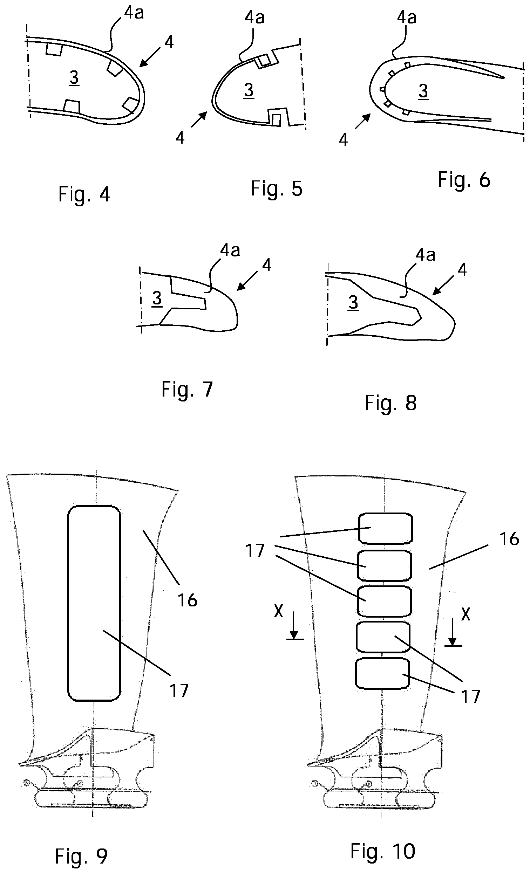

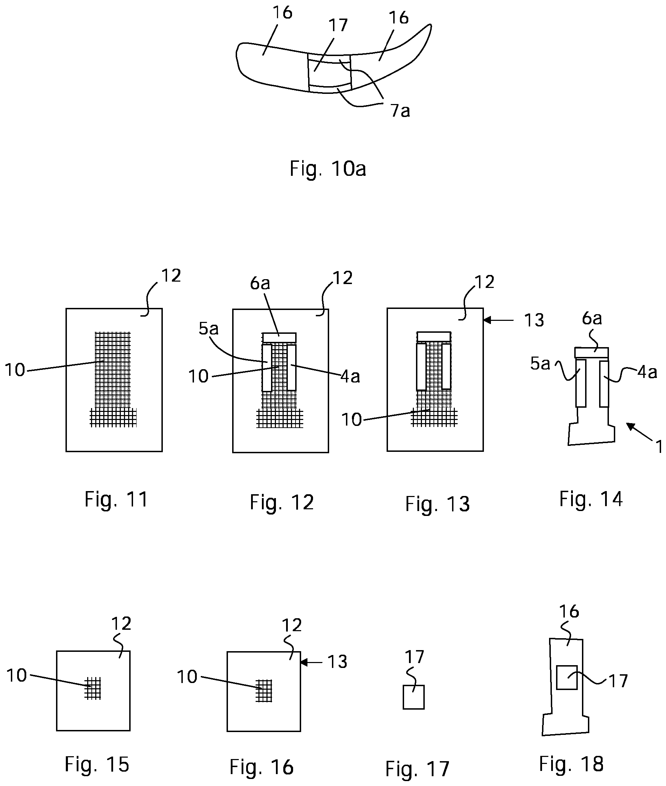

The blade 1 comprises one or more composite material parts; e.g. the blade 1 is made out of a composite material (i.e. the root 2 and the airfoil 3 are both made out of a composite material), or only a part of the blade 1 can be made out of a composite material, in this case preferably the airfoil 3 or a part of the airfoil 3 is made out of a composite material and the rest of the blade can be made out of metal, such as known nickel steel alloys. For example, figure 1 shows a blade defined by the composite material part and figures 9 and 10 show blades having metal parts 16 and provided with composite material parts 17, as better described in the following.

In different examples, the composite material can comprise carbon fibres impregnated with an epoxy resin or polybenzoxazine or cyanate or polyimide such as a bisMaleimide (BMI) resin (BMI resin allows a higher operating temperature than epoxy resin).

The carbon fibres can be T700S and/or T800S and/or T1000G and/or M50J and/or M60J manufactured by Toray.

The resin can be epoxy RTM6 manufactured by Hexcel or BMI-RTM651 manufactured by Hexcel or araldite MT 35710FST manufactured by Huntsman Corporation.

Impregnation can be carried out by epoxy resin infiltration process for carbon fibres (Carbon Fibres Reinforced Plastic).

Machining after infiltration is possible and final erosion protection coating is possible as well.

Blades made this way can be operated up to a temperature of 150-200°C.

Alternatively, the composite material can comprise ceramic fibres impregnated with a molten metal.

The ceramic fibres can e.g. be: Nextel 312, Nextel 440, Nextel 610, Nextel 720 manufactured by 3M.

The molten metal can be aluminium, aluminium alloys, magnesium, magnesium alloys, copper, copper alloys, steel, steel alloys; as an example pure aluminium (e.g. aluminium having an Al content of 99.9% by weight or higher) can be used as the molten metal.

The infiltration method can be melt infiltration using a pressureless, pressure assisted, vacuum assisted infiltration technique. E.g. the infiltration method can be a molten metal infiltration process for ceramic fibres (Metal Matrix Composite).

Machining after infiltration is possible and final erosion protection coating is possible as well.

Blades made this way can be operated up to a temperature of 600-650°C.

The blade also has one or more inserts for protecting the composite material part from erosion. Figure 1 shows an insert 4a at the leading edge 4, an insert 5a at the trailing edge 5 and an insert 6a at the tip 6 of the blade 1. It is clear that even if figure 1 shows one insert for the leading edge, one for the trailing edge and one for the tip of the blade 1, inserts need not be provided at all the indicated positions and in addition inserts could also be provided at different positions of the blade. In addition one insert can cover multiple positions among those indicated above or multiple inserts can be provided at the shown positions. Likewise the composite material parts 17 of figures 9, 10 can be provided with an insert 7a.

According to the invention, the insert or the inserts are made out of steel, preferably a high content chromium steel; advantageously the steel of the insert has a chromium content between 10-18% by weight and preferably between 13-15% by weight. For example the following steel can be used 15-5 PH steel.

In a first example the inserts 4a, 5a, 6a of the embodiments of figure 1 comprise a foil; in the figure the foil covers the leading edge 4, trailing edge 5, tip 6. The insert 7a of the embodiments of figures 9, 10 is preferably a foil as well.

Alternatively, the inserts 4a, 5a, 6a comprise one or more solid elements that constitute the leading edge 4, trailing edge 5, tip 6. The insert of the embodiment of figures 9, 10 can be a solid element as well, but this embodiment is not preferred.

Naturally also a combination of insert being foils and solid elements is possible.

According to the invention, the insert or the inserts are advantageously coated with an erosion protection layer 8. The coating is preferably applied onto the inserts before the same inserts are connected to the composite material part.

Different techniques for coating the inserts are available, but the following have proven to be particularly advantageous.

In a first example which is an example according to the invention, the

erosion protection layer has a dual layer structure with a Nickel-Phosphor (NiP) layer and a Nickel-Phosphor/Silicon Carbide (NiP/SiC) layer above it or a multi-layer structure with multiple couples of NiP layer and a NiP/SiC layers one above the other. The dual layer structure proved to give better results.

The inserts can be coated by electroless nickel plating (in a bath). In this case the thickness of the erosion protection layer 8 is between greater than 0 to 110 micron, preferably between 25-90 micron, more preferably between 40-80 micron and even more preferably it is about 50 micron.

In addition, a nickel interlayer having a thickness of 1-2 micron and e.g. made by an electrolytic process can be provided to promote adhesion of the NiP-NiP/SiC layers to the insert.

In a second example which is not according to the invention, the inserts are coated by chemical vapour deposition of Tungsten/Tungsten Carbide (W/WC); preferably the chemical vapour deposition is carried out at a temperature less than or equal to 550°C such that the properties of the material of the insert are not negatively affected. In this case the thickness of the erosion protection layer 8 is between greater than 0 to 110 micron, preferably between 25-90 micron, more preferably between 40-80 micron and even more preferably it is about 70 micron.

The structure of this erosion protection layer 8 preferably has a single or multiple W/WC layers.

Also in this case, a nickel interlayer having a thickness of 1-4 and preferably about 3 micron and e.g. made by an electrolytic process can be provided to promote adhesion of the W/WC layer to the insert.

With reference to figure 2, the advantageous selection of the processes above is explained.

Figure 2 is representative of the erosion resistance of the inserts covered or not with an erosion protection layer.

Samples were made out of steel (e.g. 15-5 PH steel, this material can be used for manufacturing the inserts) and had a rectangular shape with a size of 25x8x3 mm.

The erosion protection layer was made by different techniques and different materials.

The samples (a side thereof provided with the erosion protection layer, when required) were perpendicularly impinged by water droplets having a diameter of 200 micron at a speed of 400 m/s.

Figure 2 shows the relationship between the mass loss -number of impacts for these samples. In particular, in this figure "M" represents the mass of the sample that was lost (i.e. eroded) because of the impacts of the water droplets and "I" represents the number of impacts.

In figure 2 curve A refers to a sample without an erosion protection layer; curve B refers to a sample with an erosion protection layer made by titanium nitride applied by PVD (physical vapour deposition) with a thickness of 50 micron, other technologies for making the erosion protection layer, such as polyurethane coating with a thickness of 150 - 200 micron applied by HVLP (high volume low pressure), airless spraying or brushing, provided similar results; curve C refers to a sample covered by an erosion protection layer made by electroless nickel plating (in a bath) with a thickness of 50 micron; curve D refers to a sample with an erosion protection layer made by chemical vapour deposition of W/WC at a temperature less than or equal to 550°C and a thickness of 70 micron.

The thickness of the coating is optimized to get adhesion/mechanical properties/chemical properties/erosion resistance.

This figure shows that uncoated samples have poor erosion resistance, because droplet impacts make them lose a large amount of material (curve A).

The behaviour improves by providing an erosion protection layers (curve B).

Curves C and D show a dramatic erosion resistance improvement that is obtained by providing an erosion protection layer made by electroless nickel plating or chemical vapour deposition. In addition, between these two techniques, the chemical vapour deposition carried out at low temperature, such as at a temperature equal to or less than 550°C has shown the best results.

The present disclosure also refers to a method for manufacturing a blade.

The method comprises providing one or more fibre preforms 10; the fibre preforms can have the shape of the final blade part to be manufactured or can be deformed in order to have such a final shape. The fibre preforms are realized in different examples by stitching, braiding, knitting, weaving, uniaxial/multiaxial non crimp weaving of fibres, or through fabric lay-up.

According to the invention, the method then comprises providing one or more inserts 4a, 5a, 6a, 7a; the inserts can be used for the leading edge and/or trailing edge and/or tip or for a different part of the blade; the inserts are made out of steel. The inserts are advantageously of the kind addressed above, such as foils and/or solid elements.

Thus, the method comprises impregnating the fibre preforms 10 and joining the impregnated fibre preforms 10 to the inserts 4a, 5a, 6a, 7a.

According to the methods, the insert is coated with an erosion protection layer preferably before joining. As explained above, coating advantageously comprises electroless nickel plating or chemical vapour deposition, that is preferably carried out at a temperature less than or equal to 550°C.

Impregnating and joining can be carried out in different ways, namely in one step or in multiple steps.

When the method is carried out is one step (figures 11-14), impregnating and joining comprise placing fibre preforms 10 (figure 11) and the inserts 4a, 5a, 6a (figure 12) in a mould 12, providing an impregnant 13 (figure 13) such as an epoxy resin or polybenzoxazine or cyanate or polyimide resin such as BMI resin in the mould 12; the impregnant is thus solidified (i.e. the resin is cured), to impregnate the fibre preforms 10 joining the impregnated fibre preforms 10 and the inserts 4a, 5a, 6a and define the blade 1 in one step.

In a preferred embodiment impregnating (and joining) is carried out by resin transfer moulding process (RTM process).

After impregnation the blade 1 is removed from the mould 12 (figure 14).

When the method is carried out in multiple steps (figures 15-18), impregnating comprises placing the fibre preforms 10 in a mould 12 (figure 15), providing an impregnant 13 such as epoxy or polybenzoxazine or cyanate or polyimide such as BMI or molten metal (figure 16), solidifying the impregnant 13 to form one or more composite material parts 17.

Then joining comprises bonding or mechanically interlocking the composite material parts 17 and the inserts 4a, 5a, 6a, 7a and possibly a metal blade part 16, to define the blade 1 (figure 18).

For example, the method for realizing a blade in multiple steps can comprise manufacturing a composite material part that has all the geometrical features of the blade and then apply the coated inserts on it, e.g. at the leading edge and/or trailing edge and/or tip thereof, resulting in the blade of figure 1.

Alternatively, the method for realizing a blade in multiple steps can comprise manufacturing one or more composite material parts 17, providing a metal blade part 16 provided with one or more seats, providing the composite material parts 17 and the inserts 7a (preferably coated inserts) into the seats, resulting in the blade of figures 9, 10. In this case, preferably the insert 7a and preferably also the erosion protection layer thereof are housed within the seat, i.e. as shown in figure 10a the surface of the insert 7a (an preferably also of the erosion protection layer) facing outwards is flush with the external surface of the metal part 16 of the blade 1.

Figures 4 through 8 show different examples of inserts bounded or mechanically interlocked to the composite material part of the blade. In particular, figures 4-6 refer to mechanical interlocking and figures 7-8 refer to bonding. In addition, mechanical interlocking and bonding can be simultaneously applied. Moreover, figures 4 and 5 refer to foils as inserts, and figures 6-8 refer to solid elements as inserts.

In the following there are described some embodiments of the blade.

### EXAMPLE 1

The blade is made out of composite material and the inserts are defined by foils or solid elements made out of high chromium steel coated by an erosion protection layer.

The composite material comprises or consists of carbon fibres impregnated with epoxy resin, alternatively the composite material comprises or consists of ceramic fibres impregnated with molten metal.

The erosion protection layer has a single layer structure or dual layer structure or multi-layer structure.

The erosion protection layer is realized by electroless nickel plating and has a thickness greater than 0 and smaller or equal to 110 micron, preferably between 25-90 micron, more preferably between 40-80 micron and even more preferably it is about 50 micron.

The insert further comprises a nickel interlayer to promote adhesion of the erosion protection layer; preferably the nickel interlayer has a thickness of 1-2 micron.

Alternatively the erosion protection layer is realized by chemical vapour deposition and comprises one or more (preferably only one) layer of W/WC. In this case, the erosion protection layer has a thickness between greater than 0 to 110 micron, preferably between 25-90 micron, more preferably between 40-80 micron and even more preferably it is about 70 micron.

Advantageously the chemical vapour deposition is carried out at a temperature less than or equal to 550°C.

When the insert is a foil, it has a thickness of 0.2-0.4 mm and preferably it is pre-shaped or moulded to the desired shape.

The steel of the insert has a chromium content between 10-18% by weight and preferably between 13-15% by weight.

For example, the insert (either the foil or solid insert) can be done out of 15-5 PH steel.

### EXAMPLE 2

The blade is made out of composite material and the inserts are defined by foils or solid elements made out of high chromium steel coated by an erosion protection layer.

Preferably, the composite material part is made out of a ceramic fibre preform impregnated with the molten metal.

The ceramic fibres can e.g. be: Nextel 312, Nextel 440, Nextel 610, Nextel 720 manufactured by 3M. The preform can be prepared by stitching, braiding, knitting, weaving, uniaxial/multiaxial non crimp weaving of fibres, fabric, spread tow. The molten metal can be aluminium, aluminium alloys, magnesium, magnesium alloys, copper, copper alloys. For example pure aluminium (Al content 99.9% by weight or higher) can be used as molten metal. The infiltration method can be melt infiltration using a pressureless, pressure assisted, vacuum assisted infiltration technique. Machining after infiltration is possible and final erosion protection coating is possible as well.

Coating can be made by electroless nickel plating or chemical vapour deposition of W/WC, preferably carried out at a temperature less than or equal to 550°C.

When the insert is a foil, the foil has a thickness of preferably 0.2-0.4 mm and is pre-shaped or moulded to the desired shape. The steel of the insert has a chromium content between 10-18% by weight and preferably between 13-15% by weight.

Naturally the features described may be independently provided from one another. For example, the features of each of the attached claims can be applied independently of the features of the other claims. In addition reference to nickel or nickel alloys in the above description has to be understood to refer to nickel or nickel alloys used in the field.

In practice the materials used and the dimensions can be chosen at will according to requirements and to the state of the art.

The invention is soley defined by the accompanying claims.

## Claims

1. A blade (1) for use in a gas turbine comprising at least a composite material part (3, 17) and at least an insert (4a, 5a, 6a, 7a) at least partially covering the composite material part (3, 17), wherein the insert (4a, 5a, 6a, 7a) is made out of steel, and the insert (4a, 5a, 6a, 7a) is coated with an erosion protection layer (8), **characterised in that** the erosion protection layer (8) has one of a dual layer structure with a Nickel-Phosphor layer and a Nickel-Phosphor/Silicon Carbide layer above the Nickel-Phosphor layer or a multi-layer structure with multiple couples of Nickel-Phosphor layers and Nickel-Phosphor/Silicon Carbide layers one above the other.

2. The blade (1) according to claim 1, **characterized in that** the insert (4a, 5a, 6a, 7a) is coated by electroless nickel plating.

3. The blade (1) of claim 1, **characterized in that** the insert (4a, 5a, 6a, 7a) is a foil.

4. The blade (1) of claim 1, **characterized in that** the insert (4a, 5a, 6a, 7a) is a solid element.

5. The blade (1) according to any of the previous claims, **characterized in that** the steel of the insert (4a, 5a, 6a, 7a) has a Chromium content between 10-18% by weight and preferably between 13-15% by weight.

6. The blade (1) according to claim 1, **characterized by** further comprising a metal part (16), wherein the metal part (16) has at least a seat housing the composite material part (17).

7. The blade (1) of claim 6, **characterized in that** the insert (4a, 5a, 6a, 7a) is housed in the seat.

8. The blade (1) according to any of the claims 1 to 7, **characterized in that** the composite material of the at least a composite material part (3, 17) comprises carbon fibres impregnated with epoxy or polybenzoxazine or cyanate or polyimide preferably Bismaleimide (BMI) resin.

9. The blade (1) according to any of claims 1 to 7, **characterized in that** the composite material (3, 17) of the at least a composite material part comprises molten metal impregnated ceramic fibres.

10. A method for manufacturing a blade for use in a gas turbine, **characterized by** comprising
providing at least a fibre preform (10),
providing at least a steel insert (4a, 5a, 6a, 7a), impregnating the at least a fibre preform (10),
joining the at least an impregnated fibre preform (10) to the at least an insert (4a, 5a, 6a, 7a),
coating the insert (4a, 5a, 6a, 7a) with an erosion protection layer (8),
**characterized in that** the erosion protection layer (8) has one of a dual layer structure with a Nickel-Phosphor layer and a Nickel-Phosphor/Silicon Carbide layer above the Nickel-Phosphor layer or a multi-layer structure with multiple couples of Nickel-Phosphor layers and Nickel-Phosphor/Silicon Carbide layers one above the other.

11. The method of claim 10, **characterized in that** the coating is by electroless nickel plating.

12. The method of claim 10 or 11, **characterized in that** the impregnating and the joining comprise placing the at least a fibre preform (10) and the at least an insert (4a, 5a, 6a, 7a) in a mould (12), providing an impregnant (13) in the mould (12) and solidifying the impregnant, to impregnate the at least a fibre preform (10) and join the at least a fibre preform (10) and at least an insert (4a, 5a, 6a, 7a) to define the blade in one step, and wherein after impregnation the method comprises removing the blade from the mould (12).

13. The method of claim 10 or 11, **characterized in that**
the impregnating comprises placing the at least a fibre preform (10) in a mould (12), impregnating and solidifying to realize at least a composite material part (17), and
the joining comprises bonding or mechanically interlocking the at least a composite material part (17) and the at least an insert (4a, 5a, 6a, 7a).

14. The method of claim 13, **characterized by** further comprising providing a metal blade part (16) provided with at least a seat, and providing the at least an insert into the at least a seat.

15. The method of any of claims 11-14, **characterized by** the coating with the erosion protection layer (8) is before the joining.

## Patentansprüche

1. Schaufel (1) zur Verwendung in einer Gasturbine, umfassend mindestens ein Verbundwerkstoffteil (3, 17) und mindestens einen Einsatz (4a, 5a, 6a, 7a), der das Verbundwerkstoffteil (3, 17) mindestens teilweise abdeckt, wobei der Einsatz (4a, 5a, 6a, 7a) aus Stahl hergestellt ist und der Einsatz (4a, 5a, 6a, 7a) mit einer Erosionsschutzschicht (8) beschichtet ist, **dadurch gekennzeichnet, dass** die Erosionsschutzschicht (8) eines aus einer Zweischichtstruktur mit einer Nickel-Phosphor-Schicht und einer Nickel-Phosphor/Siliziumkarbid-Schicht über der Nickel-Phosphor-Schicht oder eine Mehrschichtstruktur mit mehreren Paaren aus Nickel-Phosphor-Schichten und Nickel-Phosphor/Siliziumkarbid-Schichten übereinander aufweist.

2. Schaufel (1) gemäß Anspruch 1, **dadurch gekennzeichnet, dass** das Beschichten des Einsatzes (4a, 5a, 6a, 7a) durch Chemisch-Nickel-Beschichten erfolgt.

3. Schaufel (1) gemäß Anspruch 1, **dadurch gekennzeichnet, dass** der Einsatz (4a, 5a, 6a, 7a) eine Folie ist.

4. Schaufel (1) gemäß Anspruch 1, **dadurch gekennzeichnet, dass** der Einsatz (4a, 5a, 6a, 7a) ein Blockwerkstoffelement ist.

5. Schaufel (1) gemäß einem der vorhergehenden Ansprüche, **dadurch gekennzeichnet, dass** der Stahl des Einsatzes (4a, 5a, 6a, 7a) einen Chromgehalt zwischen 10 und 18% Gew.-% und vorzugsweise zwischen 13 und 15 Gew.-% hat.

6. Schaufel (1) gemäß Anspruch 1, **dadurch gekennzeichnet, dass** sie ferner ein Metallteil (16) aufweist, wobei das Metallteil (16) mindestens einen Sitz hat, in dem das Verbundwerkstoffteil (17) untergebracht ist.

7. Schaufel (1) gemäß Anspruch 6, **dadurch gekennzeichnet, dass** der Einsatz (4a, 5a, 6a, 7a) in dem Sitz untergebracht ist.

8. Schaufel (1) gemäß einem der Ansprüche 1 bis 7, **dadurch gekennzeichnet, dass** der Verbundwerkstoff des mindestens einen Verbundwerkstoffteils (3, 17) Kohlenstofffasern umfasst, die mit Epoxid- oder Polybenzoxazin- oder Cyanat- oder Polyimid-, vorzugsweise Bismalimid (BMI), -Harz imprägniert sind.

9. Schaufel (1) gemäß einem der Ansprüche 1 bis 7, **dadurch gekennzeichnet, dass** der Verbundwerkstoff des mindestens einen Verbundwerkstoffteils (3, 17) mit geschmolzenem Metall imprägnierte Keramikfasern umfasst.

10. Verfahren zum Herstellen einer Schaufel zur Verwendung in einer Gasturbine, **dadurch gekennzeichnet, dass** es umfasst:
Bereitstellen mindestens einer Faser-Vorform (10),
Bereitstellen mindestens eines Stahl-Einsatzes (4a, 5a, 6a, 7a),
Imprägnieren der mindestens einen Faser-Vorform (10),
Zusammenfügen der mindestens einen Faser-Vorform (10) mit dem mindestens einen Einsatz (4a, 5a, 6a, 7a),
Beschichten des Einsatzes (4a, 5a, 6a, 7a) mit einer Erosionsschutzschicht (8),
**dadurch gekennzeichnet, dass** die Erosionsschutzschicht (8) eines aus einer Zweischichtstruktur mit einer Nickel-Phosphor-Schicht und einer Nickel-Phosphor/Siliziumkarbid-Schicht über der Nickel-Phosphor-Schicht oder eine Mehrschichtstruktur mit mehreren Paaren aus Nickel-Phosphor-Schichten und Nickel-Phosphor/Siliziumkarbid-Schichten übereinander aufweist.

11. Verfahren gemäß Anspruch 10, **dadurch gekennzeichnet, dass** die Beschichtung durch Chemisch-Nickel-Beschichten erfolgt.

12. Verfahren gemäß Anspruch 10 oder 11, **dadurch gekennzeichnet, dass** das Imprägnieren und das Zusammenfügen umfassen: Legen der mindestens einen Faser-Vorform (10) und des mindestens einen Einsatzes (4a, 5a, 6a, 7a) in ein Werkzeug (12), Bereitstellen eines Imprägnierungsmittels (13) in dem Werkzeug (12) und Aushärten-Lassen des Imprägnierungsmittels zum Imprägnieren der mindestens einen Faser-Vorform (10) und Zusammenfügen der mindestens einen Faser-Vorform (10) mit dem mindestens einen Einsatz (4a, 5a, 6a, 7a) zum Definieren der Schaufel in einem Schritt, und wobei nach dem Imprägnieren das Verfahren ein Entnehmen der Schaufel aus dem Werkzeug (12) umfasst.

13. Verfahren gemäß Anspruch 10 oder 11, **dadurch gekennzeichnet, dass** das Imprägnieren umfasst: Legen der mindestens einen Faser-Vorform (10) in ein Werkzeug (12), Imprägnieren und Aushärten-Lassen zum Herstellen mindestens eines Verbundwerkstoffteils (17), und das Zusammenfügen umfasst: stoffschlüssiges oder formschlüssiges Verbinden des mindestens einen Verbundwerkstoffteils (17) mit dem mindestens einen Einsatz (4a, 5a, 6a, 7a).

14. Verfahren gemäß Anspruch 13, **dadurch gekennzeichnet, dass** es ferner umfasst: Bereitstellen eines Metallschaufelteils (16), das mit mindestens einem Sitz ausgestattet ist, und Bereitstellen des mindestens einen Einsatzes in den mindestens einen Sitz hinein.

15. Verfahren gemäß einem der Ansprüche 11 bis 14, **dadurch gekennzeichnet, dass** das Beschichten mit der Erosionsschutzschicht (8) vor dem Zusammenfügen erfolgt.

## Revendications

1. Aube (1) destinée à être utilisée dans une turbine à gaz, comprenant au moins une partie en matériau composite (3, 17) et au moins un insert (4a, 5a, 6a, 7a) recouvrant au moins partiellement la partie en matériau composite (3, 17), dans laquelle l'insert (4a, 5a, 6a, 7a) est en acier, et l'insert (4a, 5a, 6a, 7a) est revêtu d'une couche de protection contre l'érosion (8), **caractérisée en ce que** la couche de protection contre l'érosion (8) a l'une d'une structure à deux couches avec une couche de nickel-phosphore et une couche de nickel-phosphore/carbure de silicium au-dessus de la couche de nickel-phosphore ou d'une structure multicouche avec de multiples couples de couches de nickel-phosphore et de couches de nickel-phosphore/carbure de silicium les unes au-dessus des autres.

2. Aube (1) selon la revendication 1, **caractérisée en ce que** l'insert (4a, 5a, 6a, 7a) est revêtu par placage au nickel autocatalytique.

3. Aube (1) selon la revendication 1, **caractérisée en ce que** l'insert (4a, 5a, 6a, 7a) est une feuille.

4. Aube (1) selon la revendication 1, **caractérisée en ce que** l'insert (4a, 5a, 6a, 7a) est un élément solide.

5. Aube (1) selon l'une quelconque des revendications précédentes, **caractérisée en ce que** l'acier de l'insert (4a, 5a, 6a, 7a) a une teneur en chrome entre 10 et 18 % en poids et de préférence entre 13 et 15 % en poids.

6. Aube (1) selon la revendication 1, **caractérisée en ce qu'**elle comprend en outre une partie métallique (16), dans laquelle la partie métallique (16) a au moins un siège logeant la partie en matériau composite (17).

7. Aube (1) selon la revendication 6, **caractérisée en ce que** l'insert (4a, 5a, 6a, 7a) est logé dans le siège.

8. Aube (1) selon l'une quelconque des revendications 1 à 7, **caractérisée en ce que** le matériau composite de la au moins une partie en matériau composite (3, 17) comprend des fibres de carbone imprégnées de résine époxy ou de polybenzoxazine ou de cyanate ou de polyimide, de préférence de bismaléimide (BMI).

9. Aube (1) selon l'une quelconque des revendications 1 à 7, **caractérisée en ce que** le matériau composite (3, 17) de la au moins une partie en matériau composite comprend des fibres céramiques imprégnées de métal fondu.

10. Procédé pour fabriquer une aube destinée à être utilisée dans une turbine à gaz, **caractérisé en ce qu'**il comprend
la fourniture d'au moins une préforme en fibres (10),
la fourniture d'au moins un insert en acier (4a, 5a, 6a, 7a),
l'imprégnation de la au moins une préforme en fibres (10),
la jonction de la au moins une préforme en fibres (10) imprégnée au au moins un insert (4a, 5a, 6a, 7a),
le revêtement de l'insert (4a, 5a, 6a, 7a) avec une couche de protection contre l'érosion (8),
**caractérisé en ce que** la couche de protection contre l'érosion (8) a l'une d'une structure à deux couches avec une couche de nickel-phosphore et une couche de nickel-phosphore/carbure de silicium au-dessus de la couche de nickel-phosphore ou d'une structure multicouche avec de multiples couples de couches de nickel-phosphore et de couches de nickel-phosphore/carbure de silicium les unes au-dessus des autres.

11. Procédé selon la revendication 10, **caractérisé en ce que** le revêtement est par placage au nickel autocatalytique.

12. Procédé selon la revendication 10 ou 11, **caractérisé en ce que** l'imprégnation et la jonction comprennent la mise en place de la au moins une préforme en fibres (10) et du au moins un insert (4a, 5a, 6a, 7a) dans un moule (12), la fourniture d'un agent d'imprégnation (13) dans le moule (12) et la solidification de l'agent d'imprégnation, pour imprégner la au moins une préforme en fibres (10) et joindre la au moins une préforme en fibres (10) et au moins un insert (4a, 5a, 6a, 7a) pour définir l'aube en une étape, et dans lequel après l'imprégnation, le procédé comprend le retrait de l'aube du moule (12).

13. Procédé selon la revendication 10 ou 11, **caractérisé en ce que** l'imprégnation comprend la mise en place de la au moins une préforme en fibres (10) dans un moule (12), l'imprégnation et la solidification pour réaliser au moins une partie en matériau composite (17), et la jonction comprend la liaison ou l'emboîtement mécanique de la au moins une partie en matériau composite (17) et du au moins un insert (4a, 5a, 6a, 7a).

14. Procédé selon la revendication 13, **caractérisé en ce qu'**il comprend en outre la fourniture d'une partie d'aube métallique (16) munie d'au moins un siège, et la fourniture du au moins un insert dans le au moins un siège.

15. Procédé selon l'une quelconque des revendications 11 à 14, **caractérisé en ce que** le revêtement avec la couche de protection contre l'érosion (8) est avant la jonction.
